# DEMANDE DE BREVET EUROPEEN

(11) **EP 2 036 862 A1**
(43) Date de publication de la demande: **18.03.2009**
(21) Numéro de dépôt: 08290842.7
(22) Date de dépôt: 08.09.2008
(51) Int. Cl.: C02F 1/28, C02F 103/32

(54) **Procédé de traitement de déchets majoritairement liquides contenant des effluents aqueux et de la matière organique**

(30) Priorité: 11.09.2007 FR 0706350
(71) Demandeur: CNAM-CONSERVATOIRE NATIONAL DES ARTS ET METIERS, 75003 Paris (FR)
(72) Inventeur: Le Buzit, Gérard, 75003 Paris (FR); Favre-Reguillon, Alain, 75003 Paris (FR)
(74) Mandataire: Chauvin, Vincent

(57) **Abrégé**

La présente invention concerne un procédé de traitement de déchets majoritairement liquides contenant des effluents aqueux et de la matière organique, comportant les étapes suivantes :
a) on adsorbe et/ou absorbe les déchets majoritairement liquides sur des matériaux ligneux,
b) on évapore au moins une partie de l'eau contenue dans les déchets majoritairement liquides adsorbés et/ou absorbés sur ces matériaux ligneux.

## Description

### DOMAINE TECHNIQUE AUQUEL SE RAPPORTE L'INVENTION

La présente invention concerne de manière générale le traitement et /ou la valorisation de déchets industriels ou agricoles majoritairement liquides contenant des effluents aqueux et de la matière organique.

Elle concerne en particulier un procédé de traitement de déchets majoritairement liquides contenant des effluents aqueux et de la matière organique.

### ARRIÈRE-PLAN TECHNOLOGIQUE

Différentes industries ont pour déchets des effluents aqueux contenant de la matière organique : par exemple, l'industrie oléicole, l'industrie laitière, l'élevage, les industries de transformation de produits agricoles, comme l'industrie agro-alimentaire, et les industries concernées par des activités d'assainissement et de traitement des déchets.

L'industrie oléicole en particulier produit, en plus des huiles extraites de végétaux oléagineux, de grandes quantités de ces déchets. Dans le cas de l'huile d'olive, ces déchets sont de deux types: les déchets solides, ou grignons, sont formés des pulpes et des noyaux d'olive après extraction de l'huile par pressage, tandis que les déchets liquides, ou margines, sont des effluents aqueux formés de l'eau contenue dans les olives, de l'eau de nettoyage de l'huile et de l'eau ajoutée au cours du processus de production de l'huile. Environ 2,5 litres de margines sont produites pour obtenir 1 litre d'huile d'olive.

Or les margines sont la source de nombreux problèmes environnementaux. Ce sont en effet des effluents aqueux très acides (pH compris entre 3 et 5,9), à très forte charge saline, et qui contiennent une grande quantité de matière organique polluante, par exemple des acides gras (de 1 à 23 grammes par litre) et des polyphénols (de 1 à 80 grammes par litre). Ces substances organiques inhibent le développement de certains micro-organismes et bactéries et empêchent le traitement de ces effluents par des voies biologiques.

Selon un procédé de traitement et de valorisation des margines déjà connu, on utilise celles-ci comme fertilisants, pour une valorisation agronomique par épandage direct ou après stockage. Cependant, ce procédé présente l'inconvénient de nécessiter de grandes surfaces d'épandage, et a de nombreuses conséquences néfastes sur l'environnement : acidification et destruction de la microflore des sols, production de sels potassiques ayant un effet toxique sur les plantations et pollution des nappes phréatiques proches.

Un autre procédé de traitement des margines consiste à les stocker dans des bassins de stockage peu profonds et à l'air libre, d'où elles s'évaporent naturellement. Ce procédé présente cependant de nombreux inconvénients: il nécessite de très grandes surfaces de bassins, il est lent, car l'évaporation est freinée par la formation d'une couche d'huile à la surface des margines, il est malodorant et produit finalement un résidu solide qu'il faut traiter.

D'autres procédés de valorisation des margines sont connus dans le secteur de l'élevage, dans le domaine de l'alimentation animale : une fois concentrée, la matière organique contenue dans les margines présente une haute valeur nutritionnelle.

D'autres procédés de traitement connus proposent l'adsorption sélective de certains matériaux organiques contenus dans les margines sur des granulés de charbon actif ou sur des adsorbants naturels permettant l'épuration des margines par un effet de filtration, ou encore la dégradation de cette matière organique par des procédés catalytiques ou électrochimiques.

Ces procédés nécessitent cependant des investissements élevés et engendrent des coûts opérationnels importants qui ne peuvent être assumés par les producteurs et/ou triturateurs du secteur de l'huilerie.

### OBJET DE L'INVENTION

Par rapport à l'état de la technique précité, la présente invention propose un procédé de traitement simple et à bas coûts pour les déchets majoritairement liquides contenant des effluents aqueux et de la matière organique, n'engendrant pas de pollution des sols ou des nappes phréatiques, et permettant la valorisation de la capacité calorifique de la matière organique présente dans ces déchets.

Plus particulièrement, selon l'invention, on propose un procédé de traitement de déchets majoritairement liquides contenant des effluents aqueux et de la matière organique, comportant les étapes suivantes :
a) on adsorbe et/ou absorbe ces déchets majoritairement liquides sur des matériaux ligneux,
b) on évapore au moins une partie de l'eau contenue dans les déchets majoritairement liquides adsorbés et/ou absorbés sur ces matériaux ligneux.

On entend ici par matériaux ligneux des matériaux lignocellulosiques comme de la sciure ou des copeaux de bois issus par exemple des déchets de scierie, des déchets des activités de sylviculture ou de certaines activités agricoles, par exemple les sarments des vignes ou la paille ou encore des déchets de papiers. Ces matériaux ligneux sont des adsorbants et/ou absorbants peu coûteux, et le processus d'adsorption et/ou absorption est simple à mettre en oeuvre. De plus, ce procédé permet de stocker des déchets majoritairement liquides sous forme solide, donc de manière beaucoup plus pratique pour le stockage et le transport de ces déchets. L'évaporation de l'eau contenue dans les margines adsorbées et/ou absorbées sur les matériaux ligneux est en outre plus rapide que l'évaporation réalisée en bassins de stockage, et les nuisances olfactives liées à la présence de ces margines sont éliminées.

Selon une première caractéristique avantageuse du procédé, les matériaux ligneux utilisés comme adsorbants et/ou absorbants sont constitués majoritairement de sciure de bois.

Parmi les matériaux ligneux les plus communs que sont la sciure de bois, les copeaux de bois et la paille, la sciure de bois possède le plus grand pouvoir adsorbant et/ou absorbant. De plus, elle est compactée le plus facilement et le plus efficacement.

Selon une autre caractéristique avantageuse du procédé, à une étape c), on compacte les matériaux ligneux obtenus à l'étape b).

La sciure peut être facilement compactée en briquettes ou en bûches qui peuvent être utilisées pour le chauffage, ou éventuellement dans la construction. Le volume des matériaux ligneux à stocker est de plus considérablement diminué.

Avantageusement, on forme des granulés par extrusion des matériaux ligneux à l'étape c).

Lors de la compaction des matériaux ligneux à l'étape c), on peut aussi former des granulés, utilisés comme combustible pour le chauffage. Les granulés fabriqués à partir de sciure de bois imprégnée de margine présentent des propriétés mécaniques améliorées et un pouvoir combustible augmenté par rapport aux granulés fabriqués à partir de sciure brute.

Selon une autre caractéristique avantageuse du procédé, à une étape d), on réalise la combustion des matériaux ligneux obtenus à l'étape b) ou compactés à l'étape c).

La combustion des briquettes, des bûches ou des granulés fabriqués à partir de la sciure imprégnée sèche permet de valoriser la capacité calorifique des margines.

Selon une autre caractéristique avantageuse du procédé, on élimine la matière organique insoluble des déchets majoritairement liquides lors d'une étape d'élimination précédant l'étape a).

Cette étape permet avantageusement de séparer les déchets solides, l'huile et la graisse des effluents aqueux des margines, cette matière organique insoluble pouvant être valorisée de façons différentes, par exemple par combustion, ou dans le domaine de l'alimentation animale.

Selon une autre caractéristique avantageuse du procédé, préalablement à l'étape a), on sépare les déchets majoritairement liquides en une première fraction à teneur élevée en matière organique soluble et une deuxième fraction à teneur faible en matière organique soluble et seule la première fraction à teneur élevée en matière organique soluble subit les étapes ultérieures dudit procédé.

Ainsi, la matière organique soluble valorisable des margines est concentrée avant que les autres étapes du procédé soient réalisées. La quantité d'eau présente avec cette matière organique étant plus faible, l'étape d'évaporation de l'eau après adsorption et/ou absorption de ces margines concentrées sera plus rapide.

Selon une autre caractéristique avantageuse du procédé, on sèche les matériaux ligneux bruts lors d'une étape de séchage précédant l'étape a).

La sciure de bois brute préalablement séchée adsorbe et/ou absorbe une plus grande quantité de margines que la sciure non séchée, l'étape a) d'adsorption et/ou absorption est donc plus efficace.

Selon une autre caractéristique avantageuse du procédé, l'étape b) est réalisée à une température comprise de préférence entre 20 et 100 degrés Celcius et à une pression comprise de préférence entre 10² et 10⁵ Pascal.

Ces différentes conditions d'évaporation accélèrent l'évaporation de l'eau lors de l'étape b).

Selon une autre caractéristique avantageuse du procédé, les matériaux ligneux obtenus à l'étape b) subissent à nouveau les étapes a) et b) au moins une deuxième fois.

Afin d'optimiser la quantité de margines traitées par une quantité donnée de sciure brute et d'augmenter la quantité de matière organique adsorbée et/ou absorbée sur la sciure, celle-ci subit plusieurs cycles d'adsorption et/ou absorption et d'évaporation successifs.

Selon une autre caractéristique avantageuse du procédé, lesdits déchets majoritairement liquides contiennent des molécules de polyphénols qui sont adsorbées et/ou absorbées à l'étape a) sur les matériaux ligneux.

### DESCRIPTION DÉTAILLÉE D'UN EXEMPLE DE RÉALISATION

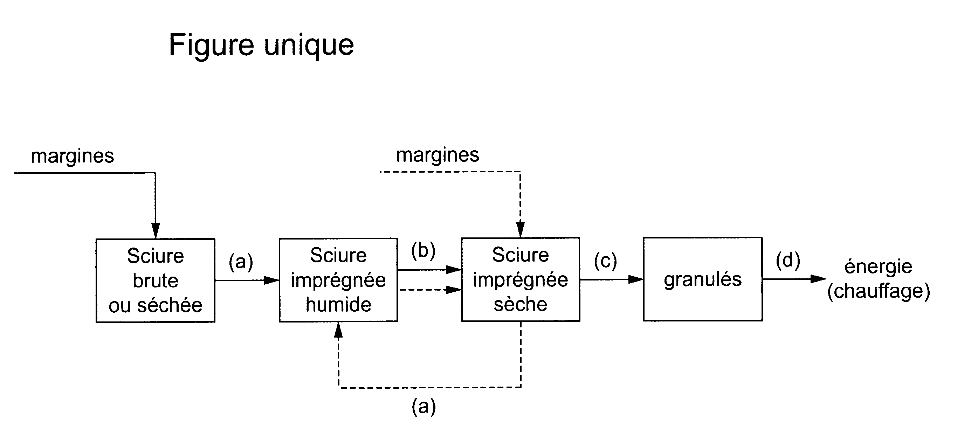

La description qui va suivre, en regard du dessin annexé, donnée à titre d'exemple non limitatif, fera bien comprendre en quoi consiste l'invention et comment elle peut être réalisée.

Pour cette description, nous avons choisi le cas de l'industrie oléicole, et nous avons décrit le procédé appliqué au traitement des déchets majoritairement liquides, appelés margines, issus des moulins à huile d'olive. Le procédé s'applique de manière analogue au traitement de tous les déchets majoritairement liquides contenant des effluents aqueux et de la matière organique issus de tout type d'industrie. Il s'applique notamment au traitement des déchets majoritairement liquides contenant des effluents aqueux et de la matière organique issus des activités agricoles comme le traitement des déchets produits par l'industrie laitière ou le traitement du lisier issu de l'élevage, des industries de transformation de produits agricoles, notamment de l'industrie agro-alimentaire, et des activités d'assainissement et de traitement des déchets.

Sur le dessin annexé, la figure unique représente schématiquement les différentes étapes du procédé selon un premier mode de réalisation.

Dans toute la description, nous regrouperons sous le terme de margines les effluents aqueux et les déchets solides issus de l'extraction industrielle de l'huile d'olive. Ces margines comprennent donc trois composants : de l'eau, de la matière organique soluble dans l'eau, par exemple des molécules de polyphénols et/ou des molécules de saccharides et polysaccharides, et de la matière organique insoluble dans l'eau et/ou hydrophobe, cette dernière comportant éventuellement des particules solides (appelées grignons). Cependant, en pratique, la quantité de particules solides est suffisamment faible pour que les margines restent globalement liquides.

Selon un premier mode de réalisation du procédé selon l'invention, la première étape, notée a), est une étape d'adsorption et/ou absorption. Cette étape peut être réalisée par tout procédé d'adsorption et/ou absorption classique.

Dans l'exemple décrit ici, un adsorbant et/ou absorbant utilisé est de la sciure de bois. Celle-ci peut être utilisée seule ou mélangée à d'autres matériaux ligneux. Cependant, l'adsorbant et/ou absorbant choisi peut être tout matériau ligneux tel que décrit précédemment utilisé seul ou un mélange quelconque de ces matériaux ligneux.

Ici, la sciure de bois est placée par exemple dans des bacs équipés de claies ajourées, de préférence de manière à former des couches d'une épaisseur inférieure à 10 centimètres, qui sont espacées d'environ 1 à 5 centimètres, par exemple par une épaisseur de géogrille ou de géotextile. Ces couches peuvent également être séparées par de la paille, ou tout autre dispositif permettant la circulation de l'air entre les couches de sciure.

On verse ensuite les margines dans ces bacs, ou alternativement, on immerge ces bacs dans les margines, de telle sorte que la sciure de bois adsorbe et/ou absorbe un maximum de margines, jusqu'à saturation. Cette réaction entre sciure de bois et margines s'effectue à température et à pression ambiante.

Les molécules de polyphénols, saccharides et polysaccharides sont en particulier adsorbées et/ou absorbées sur la sciure de bois.

La quantité de margines adsorbées et/ou absorbées dépend des caractéristiques de la sciure de bois utilisée, notamment de l'essence du bois et de la taille des particules de bois. On utilise par exemple de la sciure de hêtre avec différentes tailles de particules : ces tailles sont comprises entre 0,35 et 0,9 millimètre dans un premier type de sciure de hêtre noté HM, elles sont inférieures à 200 micromètres dans un deuxième type noté F200 et elles sont égales à 250 micromètres dans un autre type noté H250. On peut également utiliser de la sciure de résineux notée BM dont les particules ont des tailles comprises entre 2 et 4 millimètres ou de la sciure de pin sylvestre notée PS dont les particules ont des tailles comprises entre 2 et 5 millimètres.

Les travaux de recherche effectués dans le cadre de la présente invention montrent que les sciures de type HM, H250, F200, BM et PS adsorbent et/ou absorbent respectivement 4 fois, 3,44 fois, 6 fois, 4,64 fois et 3,22 fois leur poids de margines.

Cette étape d'adsorption et/ou absorption est avantageusement réalisée sur le site de production des margines, ce qui limite les odeurs provenant de ces margines.

A l'issue de cette première étape, on obtient un solide que l'on appellera « sciure imprégnée humide », constitué de sciure contenant un certain poids de margines adsorbées et/ou absorbées, c'est-à-dire un certain poids d'eau, de matière organique soluble ou insoluble adsorbée et/ou absorbée et de particules solides retenues.

La deuxième étape du procédé, notée b), est une étape d'évaporation. Elle vise à sécher la sciure imprégnée humide obtenue à l'étape a) en éliminant une partie de l'eau adsorbée et/ou absorbée.

L'évaporation de l'eau contenue dans les margines est beaucoup plus rapide lorsque celles-ci sont adsorbées et/ou absorbées sur de la sciure que lorsqu'elles sont laissées à l'air libre dans des bassins de stockage. En effet, la surface spécifique d'interface entre les margines et l'air est beaucoup plus grande lorsqu'elles sont adsorbées et/ou absorbées sur la sciure, ce qui favorise l'évaporation. De plus, la matière organique contenant l'huile résiduelle étant adsorbée et/ou absorbée sur la sciure, cette huile résiduelle ne forme pas, comme dans les bassins de stockage, un film à la surface de l'eau empêchant l'évaporation.

L'évaporation est naturelle, à température et à pression ambiante, ou est de manière alternative accélérée par un chauffage entre la température ambiante et 200 degrés Celcius et de préférence entre 30 et 80 degrés Celcius et/ou par un abaissement de la pression entre 10² et 10⁵ Pascal et/ou par l'utilisation d'un système de ventilation adéquat, par exemple en assurant un débit de gaz à la surface ou à l'intérieur de la sciure imprégnée humide.

Avantageusement, les couches de sciure étant séparées dans les bacs par un matériau permettant la circulation de l'air, l'évaporation de l'eau est favorisée.

Alternativement, un brassage régulier de la sciure imprégnée humide en cours de séchage est réalisé pour favoriser l'évaporation.

Quelles que soient les conditions d'évaporation, la durée de cette étape d'évaporation est choisie de façon à obtenir un solide que l'on appellera « sciure imprégnée sèche », dont le taux d'humidité en poids est compris entre 10% et 15%. Ce taux d'humidité facilite la transformation de la sciure imprégnée sèche en granulés. Cette durée varie de quelques heures à quelques mois selon les conditions d'évaporation.

A l'issue de cette deuxième étape, la sciure imprégnée sèche peut subir une nouvelle étape d'adsorption et/ou d'absorption puis une nouvelle étape d'évaporation. Ces cycles supplémentaires d'adsorption et/ou d'absorption et d'évaporation sont représentés par les flèches en pointillés sur la figure unique. La répétition de ces cycles augmente le rendement du procédé, puisqu'une plus grande quantité de margines est traitée avec une quantité donnée de sciure brute. A chaque répétition, la quantité de matière organique soluble ou insoluble adsorbée et/ou absorbée et de particules solides retenues sur la sciure augmente, ce qui améliore d'autant les qualités mécaniques et calorifiques des granulés fabriqués, comme expliqué ci-dessous. Le cycle d'adsorption et/ou d'absorption et d'évaporation est répété au moins une deuxième fois, et de préférence au moins six fois.

Après un nombre donné de cycles d'adsorption et/ou absorption et évaporation, on obtient de la sciure imprégnée sèche contenant un certain poids de matière organique soluble ou insoluble adsorbée et/ou absorbée et de particules solides retenues et un poids résiduel d'eau adsorbée et/ou absorbée représentant moins de 15 pourcent du poids total de ce solide.

Cette sciure imprégnée sèche est ensuite compactée au cours d'une étape notée c) sous une pression d'au moins 2 kilogrammes par centimètre cube, comprise par exemple entre 2 et 6 kilogrammes par centimètre cube, pour fabriquer par exemple des briquettes ou des bûches. Le volume de stockage de la sciure imprégnée sèche diminue alors avantageusement de 7 à 9 fois.

Dans le cas où des épaisseurs de géogrilles ou de géotextiles sont utilisées pour l'aération des couches de sciure dans les bacs, celle-ci sont bien entendues retirées. Cependant, si de la paille est utilisée à leur place, elle peut avantageusement être compactée avec la sciure.

Alternativement, la sciure imprégnée sèche est transformée en granulés par un processus d'extrusion, au cours de l'étape c).

Le processus d'extrusion consiste à comprimer la sciure imprégnée sèche à travers une matrice sous de très fortes pressions (de l'ordre de 1500 killogrammes par centimètre cube). Il est bien connu de l'homme du métier. Les granulés obtenus sont des cylindres dont le diamètre est de l'ordre de 6 à 8 millimètres et dont la longueur est typiquement comprise entre 10 et 40 millimètres.

Avantageusement, les propriétés mécaniques des granulés sont améliorées par l'imprégnation de la sciure avec les margines. En effet, lors de l'extrusion de la sciure de bois brute, c'est la lignine naturellement présente dans le bois et libérée lors du processus de compression qui sert de liant pour les granulés formés. Les molécules de polyphénols présentes dans les margines et adsorbées et/ou absorbées sur la sciure imprégnée jouent un rôle de liant additionnel, et améliorent donc la cohésion des granulés.

Il est ainsi possible d'utiliser des écorces dans la sciure pour fabriquer les granulés, ce qui n'est pas possible pour l'extrusion de sciure brute. Ensuite, les granulés se délitent moins, et la quantité de poussière produite par les granulés lors des opérations de stockage et de transport, qui est l'une des nuisances liées à l'utilisation des granulés fabriqués à partir de sciure brute, est fortement diminuée.

Enfin, le pouvoir combustible des granulés est amélioré par l'apport de la matière organique des margines, dont le pouvoir calorifique une fois séchées est d'environ 17 kilojoules par kilogramme.

Les granulés, les briquettes ou les bûches obtenus sont brûlés lors d'une étape d) pour produire par exemple l'énergie nécessaire soit à la production de l'huile, soit à la production de ces granulés. Ils peuvent aussi servir au chauffage. La composition centésimale de la sciure est peu modifiée par l'ajout des margines, qui ne perturbe pas la combustion. Celle-ci est en générale complète et permet d'éliminer les margines de façon non polluante.

Selon une première variante de ce mode de réalisation, au moins une étape de ce procédé est réalisée dans une usine de fabrication de combustible produisant des granulés de sciure, aussi appelés pellets.

De façon avantageuse, la sciure imprégnée sèche peut être mélangée avant l'extrusion à la sciure brute de cette usine de fabrication de combustible, dans des proportions comprises entre 1 et 95 pourcent en poids, de préférence plus de 50 pourcent.

Selon une deuxième variante de ce mode de réalisation, une étape préalable d'élimination de la matière organique insoluble des margines est réalisée avant l'étape a). Cette étape permet d'éliminer par exemple les particules solides, l'huile et la graisse des déchets majoritairement liquides.

Pour cela, on sépare les déchets majoritairement liquides en deux fractions, la première fraction contenant la matière organique soluble responsable de la couleur, de l'odeur et de l'inhibition du développement de certains micro-organismes et bactéries, et la deuxième fraction contenant la matière organique insoluble, en particulier les particules solides, l'huile et la graisse. On utilise pour réaliser cette séparation tout traitement chimique (comme la floculation) ou physique (comme l'ultrafiltration) connu de l'homme du métier. La première fraction contenant la matière organique soluble est traitée ensuite selon les étapes du procédé décrites dans le premier mode de réalisation. La deuxième fraction contenant la matière organique insoluble peut être valorisée par des procédés connus de l'homme du métier, par exemple dans le domaine de l'alimentation animale.

Dans le cas particulier de l'élimination des particules solides, elle peut être réalisée, par exemple, par décantation. Pour cela, on laisse par exemple les margines reposer le temps nécessaire au dépôt des particules solides au fond des bassins de stockage contenant les margines, et l'on récupère uniquement la phase liquide contenant de la matière organique, que l'on traite selon les étapes du procédé décrites dans le premier mode de réalisation.

Alternativement, on utilise pour réaliser cette élimination des particules solides tout procédé chimique ou physique connu de l'homme du métier.

Selon une troisième variante de ce mode de réalisation, une étape préalable de concentration des margines est réalisée avant l'étape a). Cette étape est destinée à séparer les margines en deux fractions : une fraction à teneur élevée en matière organique soluble et une fraction à teneur faible en matière organique soluble. Pour cela, on utilise tout traitement chimique ou physique connu de l'homme du métier, tel que la floculation ou l'ultrafiltration. On récupère la fraction à teneur élevée en matière organique soluble que l'on traite selon les étapes décrites dans le premier mode de réalisation. Cette étape permet de concentrer la matière organique soluble.

Selon une quatrième variante de ce mode de réalisation, une étape préalable de séchage de la sciure brute est réalisée avant l'étape a). La quantité de margines adsorbées et/ou absorbées sur la sciure séchée est beaucoup plus grande que sur la sciure non séchée. Les travaux de recherche effectués dans le cadre de la présente invention montrent que, dans des conditions de laboratoire, le séchage de la sciure de type PS à 105 degrés Celcius pendant 5 heures permet d'augmenter le poids de margines adsorbées et/ou absorbées sur une même quantité de sciure d'un facteur supérieur à 2.

Le rendement de la première étape d'adsorption et/ou d'absorption du procédé est donc avantageusement augmenté par le séchage préalable de la sciure brute. Les autres étapes du procédé sont inchangées.

La présente invention n'est nullement limitée aux modes de réalisation décrits et représentés mais l'homme du métier saura y apporter toute autre variante conforme à son esprit.

Le procédé a été décrit pour le traitement des déchets de moulins à huile qui utilisent un processus de production dit « 2 phases » et qui rejettent de ce fait un mélange d'effluent aqueux contenant de la matière organique et des particules solides appelées grignons. Cependant, le procédé peut être mis en oeuvre de façon inchangée sur les déchets de moulins à huile qui utilisent un processus de production dit « 3 phases » et qui rejettent de ce fait séparément des grignons et un effluent aqueux contenant de la matière organique. Les deux déchets peuvent être mélangés ou l'effluent aqueux épuré des grignons peut être traité seul selon le procédé.

Les différentes variantes du procédé décrites ci-dessus peuvent être combinées entre elles.

Différents adsorbants et/ou absorbants végétaux peuvent être utilisés comme la sciure et les copeaux de bois issus par exemple des déchets de scierie, des déchets des activités de sylviculture ou de certaines activités agricoles (par exemple les sarments de vignes) ou la paille et le mélange de ces différents matériaux ligneux en proportions variables.

## Revendications

1. Procédé de traitement de déchets majoritairement liquides contenant des effluents aqueux et de la matière organique, comportant les étapes suivantes :
a) on adsorbe et/ou absorbe les déchets majoritairement liquides sur des matériaux ligneux,
b) on évapore au moins une partie de l'eau contenue dans les déchets majoritairement liquides adsorbés et/ou absorbés sur ces matériaux ligneux.

2. Procédé selon la revendication précédente, dans lequel les matériaux ligneux utilisés comme adsorbants et/ou absorbants sont constitués majoritairement de sciure de bois.

3. Procédé selon l'une des revendications précédentes, dans lequel, à une étape c), on compacte les matériaux ligneux obtenus à l'étape b).

4. Procédé selon la revendication précédente, dans lequel à l'étape c), on forme des granulés par extrusion des matériaux ligneux obtenus à l'étape b).

5. Procédé selon la revendication précédente, dans lequel les granulés sont du type pellets.

6. Procédé selon l'une des revendications précédentes, dans lequel, à une étape d), on réalise la combustion des matériaux ligneux obtenus à l'étape b) ou compactés à l'étape c).

7. Procédé selon l'une des revendications précédentes, dans lequel on élimine la matière organique insoluble des déchets majoritairement liquides lors d'une étape d'élimination précédant l'étape a).

8. Procédé selon l'une des revendications précédentes, dans lequel, préalablement à l'étape a), on sépare les déchets majoritairement liquides en une première fraction à teneur élevée en matière organique soluble et une deuxième fraction à teneur faible en matière organique soluble et seule la première fraction à teneur élevée en matière organique soluble subit les étapes ultérieures dudit procédé.

9. Procédé selon l'une des revendications précédentes, dans lequel on sèche les matériaux ligneux bruts lors d'une étape de séchage précédant l'étape a).

10. Procédé selon l'une des revendications précédentes, dans lequel l'étape b) est réalisée à une température comprise de préférence entre 20 et 100 degrés Celcius et à une pression comprise de préférence entre 10² et 10⁵ Pascal.

11. Procédé selon l'une des revendications précédentes, dans lequel les matériaux ligneux obtenus à l'étape b) subissent à nouveau les étapes a) et b) au moins une deuxième fois.

12. Procédé selon l'une des revendications précédentes, dans lequel lesdits déchets majoritairement liquides contiennent des molécules de polyphénols qui sont adsorbées et/ou absorbées à l'étape a) sur les matériaux ligneux.

13. Procédé selon l'une des revendications précédentes, dans lequel les matériaux ligneux utilisés comme adsorbants et/ou absorbants comportent un ou plusieurs matériaux ligno-cellulosiques.
